# EUROPEAN PATENT APPLICATION

(11) **EP 3 985 474 A1**
(43) Date of publication of application: **20.04.2022**
(21) Application number: 20201427.0
(22) Date of filing: 13.10.2020
(51) Int. Cl.: G05D 23/19

(54) **A CONTROL METHOD OF A HEATER**

(71) Applicant: Aertesi S.r.l., 35026 Conselve (IT)
(72) Inventor: BOARO, Giuseppe, 35026 Conselve (IT); VITALI, Luca, 35026 Conselve (IT)
(74) Representative: Trentin, Michele

(57) **Abstract**

A control method for a heater comprising a heating element, a fan for blowing the heat generated and at least one temperature detector of the environment to be heated. The method comprises: a first heating phase **(2)** active until the detected environment temperature **(t)** is higher than a first control temperature **(T1)** corresponding to a user-set temperature **(TU)** increased by a first predetermined differential **(D1),** in this first heating phase **(2)** the heating element being active and the fan being operated at an operating speed **(VO)** equal to a predetermined heating speed **(VR);** a second maintenance phase **(10)** active when the temperature detector detects a detected ambient temperature **(t)** higher than the first control temperature **(T1),** in this second maintenance phase **(10)** the heating element being active and the fan being activated at a maintenance speed **(VM)** lower than the predetermined heating speed **(VR);** a reactivation phase of the heating phase **(2)** when the temperature detector detects a detected ambient temperature **(t)** which has fallen below the user-set temperature **(TU)** decreased by a predetermined fourth differential **(D4),** the reactivation being performed by gradually increasing the fan speed bringing it to the operating speed **(VO)** in a second predetermined time interval.

## Description

### Field of application

The present invention is applicable to the air treatment sector and its object is, in particular, represented by ventilation heating devices.

In more detail, the present invention relates to a control method for a ventilation heater.

### State of the art

In the field of air treatment, there are devices capable of heating, cooling and dehumidifying environments for both civil and industrial use. In particular, the above devices are divided into two categories: ventilation or radiant devices.

In accordance with the field of application of the present invention, reference is made below to the sole heating function of these devices, whether they are dedicated exclusively to this purpose or also comprise a simple ventilation and/or cooling section.

According to the prior art, the ventilation heating devices consist mainly of a heating element and a ventilation assembly which allow to heat the environment. The heating element, usually a coil through which a heating fluid flows or alternatively an electrical resistance, has the function of transferring the heat it generates to the air inside the system; this air is circulated by a ventilation assembly which then blows it towards the environment.

Ventilation devices are characterized by their small size and the ability to generate abundant air flows ensuring the transfer of large quantities of heat to the environment.

However, these devices have limitations.

In particular, upon reaching a predetermined temperature, the ventilation assembly is stopped and the flow of heated air towards the environment is interrupted. As a consequence of this, maintenance of the detected environment temperature reached during the heating phase is not provided.

According to the prior art, to overcome this limit, there are devices in which the ventilation assembly is kept active continuously while a control is performed on the temperature of the heating element. This temperature varies according to the value necessary to maintain the environment temperature.

However, the continuous operation of the ventilation assembly leads to high electrical consumption. Furthermore, its continuous operation causes the device to generate a constant, annoying noise.

As already mentioned, in addition to the ventilation heating devices, radiant heating devices are also known. These devices allow constant heat transfer to the environment.

The latter functionality is therefore used to overcome the limits described for ventilation heaters. In particular, heating devices are known in the state of the art which combine the functionality of the ventilation systems and the radiant systems.

These devices include both characteristic elements of the ventilation devices (i.e. a heating element and a ventilation assembly for blowing air into the environment), and radiant elements that allow heat to be transferred to the environment even if the ventilation assembly is deactivated.

However, the same heating devices which were just mentioned have a complex execution. Moreover, as a consequence, the execution and maintenance costs are also high.

The devices described in the patent documents AU 2017 261 509 A1, GB 2 236 877 A, FR 3 035 198 A1 and EP 1 594 025 A are also known which, in the absence or in the presence of a radiant portion, are focused on controlling the ventilation assembly to try to perform a maintenance function when a pre-set temperature is reached.

However, these devices are characterized by a coarse control, mainly aimed at managing the slowdown and shutdown phase of the ventilation assembly and nothing else.

### Presentation of the invention

The object of the present invention is to at least partially overcome the drawbacks found above, by making available a control method for a ventilation heater which allows the maintenance of the detected environment temperature reached without the need for radiant portions.

In particular, therefore, an object of the present invention is to provide a control method for a heater which allows to decrease or at least not increase the execution complexity of the heater device with respect to the equivalent devices of the state of the art.

A further object is to provide a control method for a heater which allows to decrease or at least not increase the production costs of the heater device with respect to the known equivalent devices.

In addition to all this, another object of the present invention is to provide a control method of a ventilation heater which, at least during the maintenance of the temperature, allows the heater to have a reduced noise compared to the heating phase and not annoying for users.

A further object of the present invention is to provide a control method of a ventilation heater which keeps the noise and disturbance to the users low even when restarting the maintenance and heating phase.

Another object of the present invention is to provide a control method for a ventilation heater which keeps power consumption low.

Such objects, as well as others which will become clearer below, are achieved by a control method for a heater according to the following claims, which are an integral part of the present disclosure.

In particular, the control method is suitable for being applied to a heater which includes, like the known heaters, a heating element, a fan for blowing the generated heat to an environment to be heated and a detector of the environment temperature.

According to an aspect of the invention, the control method comprises a first active heating phase until the detected environment temperature is higher than a first control temperature corresponding to a user-set temperature increased by a first predetermined temperature differential.

In particular, in the first heating phase, the heating element is active and the fan is driven at an operating speed at least equal to a predetermined heating speed.

Consequently, during the first phase, the detected environment temperature reaches the user-set temperature plus a first differential to guarantee its uniform value in the environment.

According to another aspect of the invention, the control method also comprises a second active maintenance phase when the temperature detector detects a detected environment temperature higher than the aforementioned first control temperature.

In particular, the heating element is active in the second maintenance phase and the fan is driven at a maintenance speed lower than the heating speed.

Advantageously, the second phase has the function of maintaining the detected environment temperature without the need for radiant elements.

Still advantageously, in the second phase, the fan is driven at a maintenance speed lower than the heating speed. In this way, the noise of the device is limited, which is typically reduced to values lower than 35 dB.

Power consumption is also advantageously limited while maintaining the fan and, above all, the heating element in operation.

Furthermore, still advantageously, the invention does not modify the elements present in known devices without a maintenance function, so that the execution complexity and production costs remain substantially unchanged and lower than those devices mentioned above which implement a maintenance function.

According to another aspect of the invention, there is then a reactivation phase of the heating phase when the temperature detector detects a detected environment temperature which has fallen below the user-set temperature decreased by a fourth predetermined temperature differential. This reactivation phase of the heating phase is performed by gradually increasing the fan speed bringing it to the operating speed in a second predetermined time interval.

Advantageously, therefore, the acceleration of the fan is not sudden, as generally occurs, but is performed gradually so as to limit the noise differential perceived by users. As a result, the degree of annoyance is decreased. In particular, during sleep hours, a gradual acceleration performed over a predetermined time interval allows to limit the sleep disturbance so as not to provoke the awakening of the users.

As known, in fact, the most important noise disturbance is not caused by the noise itself, but by the important and sudden variations in the intensity of the sound. With the method of the invention, this variation is slow and gentle, thereby decreasing the effects on users.

### Brief description of the drawings

Further features and advantages of the invention will be more evident in light of the detailed description of some preferred but not exclusive embodiments of a control method for a heater according to the invention, illustrated by way of non-limiting example with the aid of the accompanying drawings, wherein:

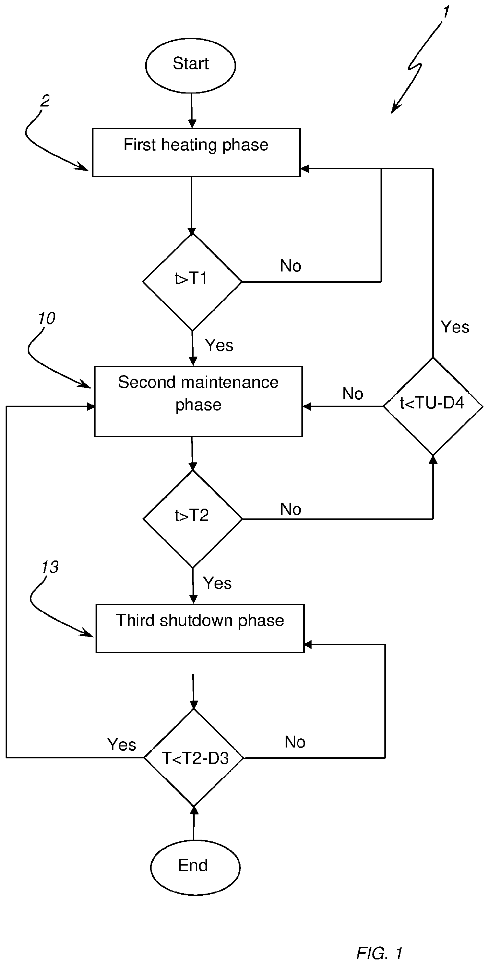

FIG. 1 represents a block diagram of the control method according to the invention;
FIG. 2 represents a schematic view of the operating phase of the method of the invention.

### Detailed description of some preferred embodiments

With reference to the aforementioned figures, described herein is a control method 1 exemplified in the figures by means of a block diagram and suitable for controlling a ventilation heater.

This heating device comprises the typical elements of the ventilation heaters present in the state of the art. For this reason, the device is not shown in the above-mentioned figures.

In particular, it includes a heating element, a fan for blowing the generated heat to an environment to be heated and a detector of the environment temperature.

Typically, the heating element comprises a coil crossed by a heating fluid and a control valve for the circulation of this fluid. However, this aspect must not be considered limiting for different embodiments of the invention where, for example, the heating element comprises an electric resistance and an element for interrupting the power supply thereof.

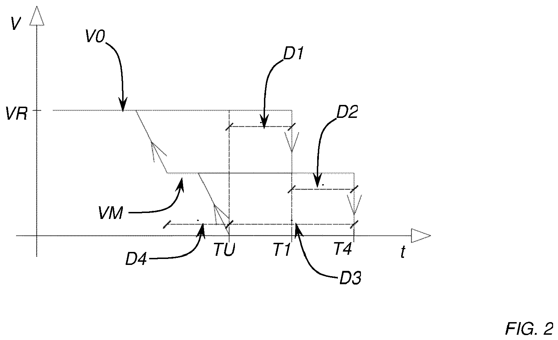

According to the embodiment which is described, the control method **1** comprises a first heating phase **2** which is active until, as can be observed in the functional diagram of fig. 2, the detected environment temperature **t** is higher than a first control temperature **T1.** This first control temperature **T1** corresponds to a user-set temperature **TU,** for example by means of insertion from the display or from different insertion devices, increased by a first predetermined differential **D1.**

The increase in the set temperature **TU** with the first differential **D1** ensures that the whole environment reaches a temperature at least equal to the set temperature **TU.** Obviously, the value of this first differential **D1** is a non-limiting characteristic for the invention and, in some cases, it can be equal to 0.

Operatively, according to the described embodiment, in the first heating phase **2** the heating element is active and the fan is driven at an operating speed **VO** at least equal to a predetermined heating speed **VR.**

The figures show that the operating speed **VO** is, during heating phase **2,** constant and equal to the predetermined heating speed **VR.** However, this aspect should not be considered limiting for different embodiments of the invention, where, for example, the operating speed varies as a function of the detected temperature, remaining however higher or equal to the predetermined heating speed.

According to another aspect of the described invention, when the temperature detector detects a detected environment temperature **t** higher than the aforementioned first control temperature **T1,** the method **1** provides for the activation of a second maintenance phase **10.**

In such second phase **10,** the heating element is active and the fan is driven at a maintenance speed **VM** lower than the above-mentioned heating speed **VR.**

Advantageously, the second phase **10** has the function of maintaining the detected environment temperature **t** without the need for radiant elements.

Still advantageously, in the second phase **10** the fan is driven at a maintenance speed **VM** lower than the operating speed **VO** characteristic of the first phase **2.** This maintenance speed **VM** leads to a decrease in the noise of the device. Typically, the **VM** maintenance speed is such as to guarantee noise values lower than 35 dB, that is, values that according to the legislation do not disturb users.

Still advantageously, in the maintenance phase **10** also power consumptions are limited while keeping the fan and, above all, the heating element running.

Furthermore, still advantageously, with the method just described, the function of maintaining the detected environment temperature **t** is achieved without adding components to the known devices without such functionality. Consequently, the execution complexity and the production costs remain substantially unchanged with respect to the known devices which do not implement maintenance functions and certainly lower than the known devices which implement this function.

From the figures it can be observed that the maintenance speed VM is constant. However, this aspect must not be considered limiting for different embodiments of the invention where, for example, the maintenance speed is variable, provided that it still guarantees noise values lower than 35 dB.

According to a further aspect of the invention, the control method **1** also comprises a third shutdown phase **13** activated when the temperature detector detects an environment temperature **t** higher than a second control temperature **T2.** The latter corresponds to the first control temperature **T1** increased by a second predetermined temperature differential **D2.**

In particular, according to the embodiment which is being described, during the third phase **13** the heating element is deactivated and the fan stopped.

Conveniently, therefore, the shutdown phase **13** is activated upon exceeding the aforementioned second control temperature **T2** so as to advantageously avoid excessive heating of the environment when the maintenance phase causes an unwanted increase in temperature.

Subsequent to the shutdown phase **13,** the detected environment temperature **t** could decrease as the heat emission from the device to the environment is interrupted.

According to the embodiment which is described, the control method **1** provides for the reactivation of the maintenance phase **10** when the environment temperature **t** drops below the second control temperature **T2** decreased by a third predetermined temperature differential **D3.** The figure shows that this temperature value corresponds to the set temperature **TU.** Obviously this aspect should not be considered limiting for the invention since both the second control temperature **T2** and the third differential **D3** can take any values regardless of the aforementioned set temperature **TU.**

In any case, the heating element reactivates and the fan restarts. However, the reactivation of the maintenance phase occurs by gradually restarting the fan and bringing it to the maintenance speed **VM** in a first predetermined time interval. Similarly, according to further embodiment variants not shown in the figures, also the slowdown of the fan speed, in the passage from the first operating phase to the second maintenance phase and from the latter to the third shutdown phase, is gradual instead of immediate as represented in the figures.

Advantageously, the restart and gradual slowdown of the fan decrease the sound effect perceived by the user, avoiding disturbing it.

According to a further aspect of the invention, the first heating phase **2** can also be reactivated. In particular, this reactivation occurs when the environment temperature **T** falls below the user-set temperature **TU** decreased by a fourth predetermined temperature differential **D4.**

Also in this case the reactivation of the heating phase occurs by gradually increasing the fan speed bringing it to the operating speed **VO** in a second predetermined time interval.

Advantageously, also in this case, the gradual increase in fan speed decreases the sound effect perceived by the user, attenuating disturbance.

The magnitude of the first predetermined time interval and the second predetermined time interval are not limiting characteristics for the present invention, provided that they are not null or substantially null. In the same way, the values of the operating speed, the heating speed, the maintenance speed and the temperature differentials are not limiting features for the present invention.

In light of the foregoing, it is understood that the control method of the invention achieves all the prefixed purposes.

In particular, the control method of the invention allows the maintenance of the detected environment temperature reached without the need to insert radiant elements.

In addition, the control method is applicable to known heating devices, without the need for additional components. This allows to guarantee lower execution complexity and production costs with respect to the known equivalent devices.

On closer inspection, the control method of the invention allows to perform a phase of maintaining the ambient temperature in which the noise of the heating device is reduced with respect to the heating phase and presents values which are not annoying for users.

Furthermore, and more importantly, the noise and the disturbance caused to users is kept low even when the maintenance and heating phase is restarted since it takes place gently thus reducing the gradient of noise increase of the device below the nuisance threshold.

The invention might be subject to many changes and variants, which are all included in the appended claims. Moreover, all the details and phases may furthermore be replaced by other technically equivalent elements, and the materials may be different depending on the needs, without departing from the protection scope of the invention defined by the appended claims.

## Claims

1. A control method for a heater comprising at least one heating element, at least one fan for blowing the heat generated by said heating element to an environment to be heated and at least one temperature detector of the environment to be heated, said method comprising:
- at least one first heating phase (**2**) active until the detected environment temperature (**t**) by said temperature detector is higher than a first control temperature (**T1**) corresponding to a user-set temperature (**TU**) increased by a first predetermined temperature differential (**D1**), said heating element being active in said first heating phase (**2**) and said fan being operated at an operating speed (**VO**) at least equal to a predetermined heating speed (**VR**);
- at least one second maintenance phase (**10**) active when said temperature detector detects a detected environment temperature (**t**) higher than said first control temperature (**T1**), in said second maintenance phase (**10**) said heating element being active and said fan being driven at a maintenance speed (**VM**) lower than said predetermined heating speed (**VR**),
said method being **characterized in** comprising a reactivation phase of said heating phase (**2**) when said temperature detector detects a detected environment temperature (**t**) which has fallen below said user-set temperature (**TU**) decreased by a fourth predetermined temperature differential (**D4**), said reactivation phase of said heating phase being performed by gradually increasing the speed of said fan bringing it to said operating speed (**VO**) in a second predetermined time interval.

2. Method according to claim 1, **characterized in that** said maintenance speed (**VM**) is such as to make said heater produce a noise lower than at least 35 dB.

3. Method according to claim 1 or 2, **characterized in that** it comprises.

4. Method according to claim 3, **characterized in that** said maintenance phase (**10**) is reactivated when said temperature detector detects a detected environment temperature (**t**) which has fallen below said second control temperature (**T2**) decreased by a third predetermined temperature differential (**D3**).

5. Method according to claim 4, **characterized in that** said reactivation of said maintenance phase occurs by reactivating said heating element and restarting said fan gradually bringing it to said maintenance speed (**VM**) in a first predetermined time interval.

6. Method according to any one of the preceding claims, **characterized in that** said heating element comprises a coil through which a heating fluid flows and a control valve for the circulation of said heating fluid.

7. Method according to any one of claims 1 to 5, **characterized in that** said heating element comprises an electric resistance and an element for interrupting the power supply thereof.
